# EUROPEAN PATENT SPECIFICATION

(11) **EP 2 913 260 B1**
(45) Date of publication and mention of the grant of the patent: **19.01.2022**
(21) Application number: 15156675.9
(22) Date of filing: 26.02.2015
(51) Int. Cl.: B62M 6/50, B62H 3/00, B60L 15/20, B60L 50/20, B60L 58/12

(54) **Power-assisted bicycle and assist system therefor**
Leistungsunterstütztes Fahrrad und Unterstützungssystem dafür
Bicyclette à commande assistée et son système d'assistance

(30) Priority: 28.02.2014 JP 2014039821
(43) Date of publication of application: 02.09.2015
(73) Proprietor: Yamaha Hatsudoki Kabushiki Kaisha, Iwata-shi, Shizuoka 438-8501 (JP)
(72) Inventor: Arimune, Nobuyasu, Iwata-shi, Shizuoka 438-8501 (JP); Uda, Masatsugu, Iwata-shi, Shizuoka 438-8501 (JP); Negoro, Masanori, Iwata-shi, Shizuoka 438-8501 (JP); Kinpara, Yuki, Iwata-shi, Shizuoka 438-8501 (JP)
(74) Representative: Grünecker Patent- und Rechtsanwälte PartG mbB

(56) References cited:
- EP-A1- 1 902 934
- EP-A1- 2 883 739
- WO-A1-2014/024227
- JP-A- H1 075 535
- JP-A- 2002 019 685
- US-A- 5 931 245
- US-A1- 2013 314 205

## Description

This invention relates to a power-assisted bicycle according to the preamble of independent claim 1 for rent to a user and an assist method according to the preamble of independent claim 7. Such an assist system and method can be taken from the prior art document JP H1075535 A. Said prior art teaches to restrict or to block power by the electric motor in case the related battery is charged, wherein charging of the battery can be carried out within a parking station.

In related art, a power-assisted bicycle including an electric motor that assists pedal force applied by a rider to pedals is used. JP 2007-223593 A discloses a power-assisted bicycle for rent to a user and a lock device for bicycle placed in a parking station for storing the power-assisted bicycle (the lock device is referred as a locking terminal post in JP 2007-223593 A). In JP 2007-223593 A, a plurality of lock devices are arranged side by side.

In the parking station, distances between adjacent bicycles are smaller, and thus the user may unintentionally presses pedals when the bicycle is coupled to the lock device. In this case, the electric motor drives and then a force from the electric motor larger than the force applied to the pedals by the user may act on the lock device and the body of bicycle. If reinforcement structures that can withstand the force are applied to the lock device and the body of bicycle, increase in the manufacturing cost of them may be caused.

An object of the invention is to provide a power-assisted bicycle and an assist method that may reduce a need for reinforcement of a lock device provided in a parking station and a body of bicycle.

According to the present invention said object is solved by a power-assisted bicycle having the features of independent claim 1. Preferred embodiments are laid down in the dependent claims. Moreover, said object is also solved by an assist method for power-assisted bicycle having the features of independent claim 7. Preferred embodiments are laid down in the dependent claims.

Accordingly, a power-assisted bicycle includes a drive unit including an electric motor for assisting pedal force applied to pedals and a motor controller configured to control the electric motor based on pedal force applied to pedals; a battery that accumulates electronic power to be supplied to the electric motor; a locked portion for coupling to a lock device provided in a parking station; and a device for sensing that the bicycle is placed in the parking station. The electric motor is restricted from driving when the bicycle is placed in the parking station.

An assist system according to the present teaching is a system mounted on a power-assisted bicycle including a locked portion coupled to a lock device provided in a parking station. The assist system includes an electric motor for assisting pedal force applied to pedals; a motor controller configured to control the electric motor based on pedal force; and a device for sensing that the bicycle is placed in the parking station. The electric motor is restricted from driving when the bicycle is placed in the parking station.

According to the power-assisted bicycle and the assist system, when the bicycle is placed in the parking station, a large force due to drive of the electric motor can be prevented from acting on the lock device and the body of bicycle. As a result, a need for reinforcement of them may be reduced.

In an embodiment of the present teaching, the device for sensing that the bicycle is placed in the parking station may be a sensor that senses coupling between the locked portion of the bicycle and the lock device provided in the parking station. In another embodiment of the present teaching, the device for sensing that the bicycle is placed in the parking station may be a communication module provided in a body of bicycle or the battery for communication with a communication device provided in the parking station.

Further, in an embodiment of the present teaching, the motor controller may be configured to restrict the electric motor from driving when the bicycle is placed in the parking station. In another embodiment of the present teaching, the battery may be configured to restrict electronic power from being supplied from the battery to the drive unit when the bicycle is placed in the parking station.

Furthermore, in an embodiment of the present teaching, the battery may be detachable from the body of bicycle, and the bicycle may include a notification device configured to issue an instruction to prompt detachment of the battery to the user when the bicycle is placed in the parking station. According to the configuration, the user may be prevented from leaving the parking station with the battery left in the body of bicycle.

### BRIEF DESCRIPTION OF THE DRAWINGS

Figs. 1A and 1B show power-assisted bicycles placed in a parking station according to a preferred embodiment. Fig. 1A is a side view and Fig. 1B is a plan view.
Fig. 2 is a block diagram showing a configuration of an assist system of the power-assisted bicycle.
Fig. 3 is a block diagram showing another example of the assist system.

### DETAILED DESCRIPTION OF THE PREFERRED EMBODIMENT

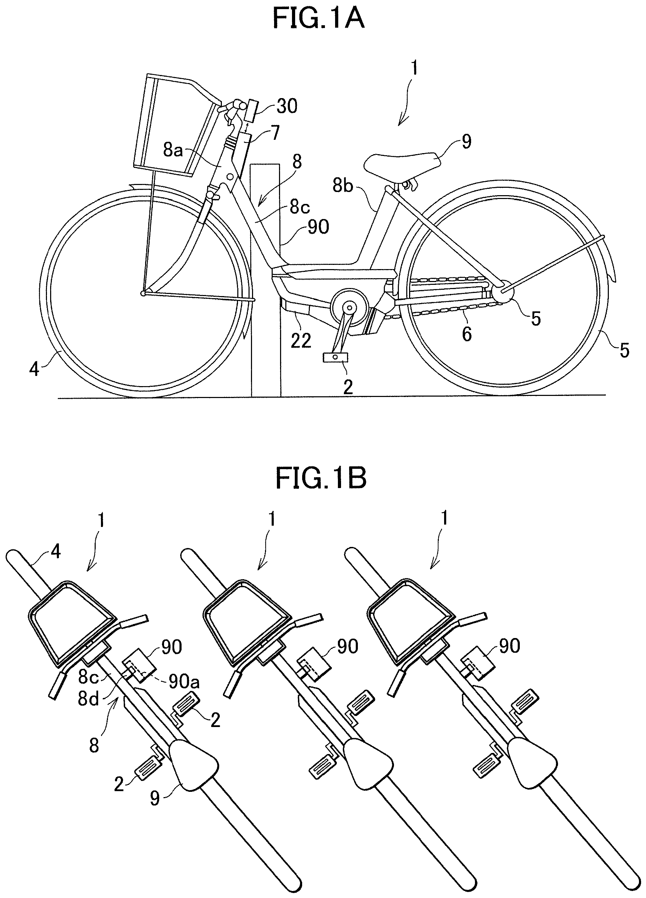

As below, a preferred embodiment will be explained with reference to the drawings. Figs. 1A and 1B show power-assisted bicycles 1 placed in a parking station according to the preferred embodiment. Fig. 1A is a side view and Fig. 1B is a plan view.

As shown in Fig. 1A, the power-assisted bicycle 1 includes pedals 2 and pedal crank 3 that rotate when a rider presses the pedals 2. Further, the power-assisted bicycle 1 includes an electric motor 22 for assisting pedal force applied by the rider to the pedals 2. A resultant force of the torque applied to the pedal crank 3 and the torque of the electric motor 22 is transmitted to a rear wheel 5. In an example of the power-assisted bicycle, the pedal crank 3 is connected to a power transmitting member to the rear wheel 5 such as a chain 6, and the electric motor 22 is connected to the power transmitting member via a reduction mechanism. In this case, the torque applied to the pedal crank 3 and the torque of the electric motor 22 are combined in the power transmitting member. The force transmitted to the power transmitting member is applied to the rear wheel 5 via a change gear mechanism. Various changes can be made to the position of the electric motor 22 in a power transmission path from the pedal crank 3 to the rear wheel 5. For example, the electric motor 22 may be provided at the downstream of the above described chain 6 and change gear mechanism in the power transmission path. In this case, for example, the electric motor 22 may be provided in a hub 5a of the rear wheel 5. Alternatively, the electric motor 22 may be provided in a hub of a front wheel 4.

The power-assisted bicycle 1 includes a battery 30 for supplying drive power to the electric motor 22, and a battery housing portion 7 for housing the battery 30. The battery 30 is attainable to, and detachable from, the battery housing portion 7. In the example shown in Fig. 1A, the battery housing portion 7 is fixed to a head pipe 8a for supporting a handle stem, however, the position is not limited to that. For example, the battery housing portion 7 may be fixed to a saddle post 8b for supporting a saddle 9.

The power-assisted bicycle 1 is a bicycle for rent to a user registered in advance. As shown in Fig. 1B, a plurality of power-assisted bicycles 1 are stored in parking stations provided throughout the town. In an example, the batteries 30 are possessed by individual users and the users place the batteries 30 possessed by themselves in the battery housing portions 7 for use of the power-assisted bicycles 1.

As shown in Fig. 1B, a plurality of lock devices 90 are provided in the parking station. The power-assisted bicycle 1 includes a locked portion 8d to be coupled to the lock device 90. The lock device 90 and the locked portion 8d are preferably formed so that the position and the attitude of the power-assisted bicycle 1 may be fixed. As shown in Fig. 1B, an example of the locked portion 8d extends toward a side from a body frame 8 of the bicycle (more specifically, a tube 8c obliquely extending rearward and downward from the head pipe 8a in Fig. 1B). The locked portion 8d is fitted in a lock portion (receiving portion) 90a formed in the lock device 90. Then, the locked portion 8d is locked (held) by a lock mechanism that the lock portion 90a includes inside. The lock structure of the power-assisted bicycle 1 is not limited to that. For example, the lock device 90 may include a chain, and the front wheel 4 or the rear wheel 5 of the power-assisted bicycle 1 may be coupled to the lock device 90 via the chain. That is, the front wheel 4 or the rear wheel 5 may be used as the locked portion.

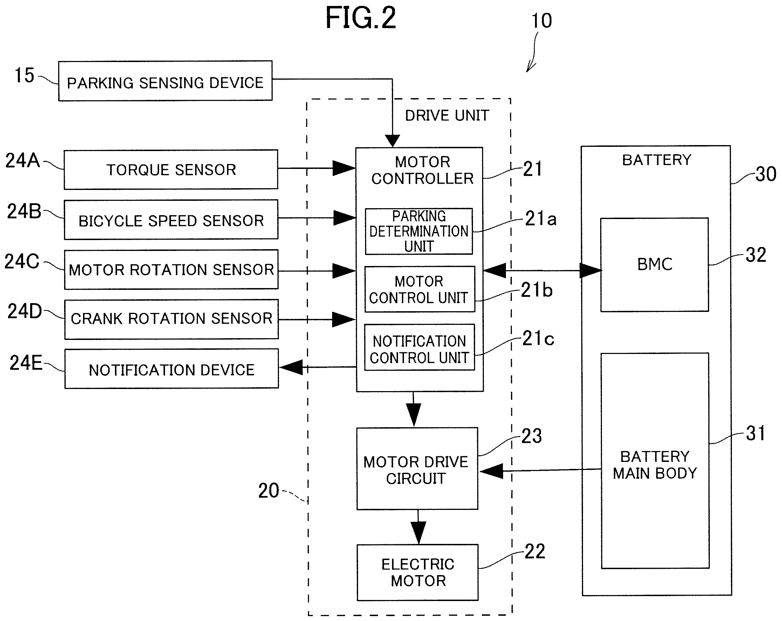

Fig. 2 is a block diagram showing a configuration of an assist system 10 of the power-assisted bicycle 1. The assist system 10 includes a drive unit 20 including the above described electric motor 22 and the battery 30.

The battery 30 includes a battery main body 31 including a plurality of battery cells that accumulate electronic power to be applied to the electric motor 22. The battery 30 includes a battery management controller (BMC) 32. The BMC 32 includes a microprocessor and programs executed by the microprocessor. The BMC 32 monitors the condition of the battery main body 31 (e.g., the BMC 32 monitors voltages, currents, temperatures of the battery cells) and calculates remaining electronic power of the battery main body 31 based on the electronic current value, charging hours and discharging hours. The BMC 32 may store, in a memory, various kinds of information (e.g., the electronic remaining power and the numbers of charging and discharging times) acquired about to the battery main body 31. Further, the BMC 32 controls charging and discharging of the battery main body 31. In an example, the BMC 32 may includes a switching element for controlling charging in the battery main body 31 and discharging from the battery main body 31.

The drive unit 20 includes a motor controller 21 and a motor drive circuit 23 in addition to the electric motor 22. The motor controller 21 includes a microprocessor and a memory in which programs to be executed by the microprocessor are stored. The motor controller 21 is configured to control the electric motor 22 based on the pedal force applied by the rider to the pedals 2.

As shown in Fig. 2, an example of the assist system 10 includes a torque sensor 24A for sensing torque applied to the pedal crank 3 and a bicycle speed sensor 24B for sensing a bicycle speed. The bicycle speed sensor 24B outputs e.g., a signal in response to the rotation speed of the front wheel 4. The bicycle speed sensor 24B may output a signal in response to the rotation speed of the rear wheel 5. The assist system 10 further includes a motor rotation sensor 24C for sensing the rotation speed of the electric motor 22 and a crank rotation sensor 24D for sensing the rotation speed of the pedal crank 3.

The motor controller 21 controls the electric motor 22 based on the signals input from these sensors to the motor controller 21. For example, the motor controller 21 calculates the gear shift position (the transmission gear ratio in the change gear mechanism) based on the output signal of the bicycle speed sensor 24B and the output signal of the motor rotation sensor 24C. Further, the motor controller 21 senses the pedal force applied to the pedals by the rider based on the output signal of the torque sensor 24A, and calculates the rotation speed of the pedal crank 3 based on the output signal of the crank rotation sensor 24D. Then, the motor controller 21 calculates torque (assist force) that the electric motor 22 should output, based on the pedal force by the rider, the gear shift position, and the rotation speed of the pedal crank 3. In other words, the motor controller 21 calculates a command value with respect to the electronic current to be applied to the electric motor 22 by the motor drive circuit 23. The motor drive circuit 23 receives electronic power from the battery 30 and supplies a electronic current in response to the command value from the motor controller 21 to the electric motor 22. Each of the battery 30 and the drive unit 20 includes a connector (not shown) for supplying the power of the battery main body 31 to the motor drive circuit 23. Further, each of the battery 30 and the drive unit 20 includes a communication interface (not shown) used for communication between the BMC 32 and the motor controller 21.

In the embodiment, as shown in Fig. 2, the assist system 10 includes a device 15 for sensing that the power-assisted bicycle 1 is placed in the parking station (hereinafter, the device is referred to as "parking sensing device"). The electric motor 22 is restricted from driving when the power-assisted bicycle 1 is placed in the parking station. Preferably, when the bicycle is placed in the parking station, the drive of the electric motor 22 is inhibited (the output torque of the electric motor 22 is set to zero). In this manner, even in the case where the user takes a test ride of a bicycle or presses pedals under a condition that the power-assisted bicycle 1 is coupled to the lock device 90, a large force due to drive of the electric motor 22 may be prevented from acting on the lock device 90 and the body of bicycle. Note that, when the power-assisted bicycle 1 is placed in the parking station, the allowable maximum torque for the electric motor 22 may be set to be lower than that when the bicycle is not placed in the parking station, as the restriction of the drive.

An example of the parking sensing device 15 is a sensor provided in the locked portion 8d of the power-assisted bicycle 1. In this case, when the locked portion 8d is locked by the lock mechanism of the lock device 90 or when the locked portion 8d is fitted in the lock portion 90a, the parking sensing device 15 inputs a signal representing that to the motor controller 21.

The parking sensing device 15 may be a non-contact sensor or contact sensor. As the non-contact sensor, e.g., a reed switch, Hall IC, photoelectric censor and magnetic induction or capacitance type proximity sensor, or the like may be used. Further, as the contact sensor, a switch to be pressed down by the lock mechanism provided in the lock device 90 or a circuit to be electorally shorted by contacting with a contact point provided in the lock mechanism may be used.

The position of the parking sensing device 15 is not limited to that in the locked portion 8d. For example, the parking sensing device 15 may be provided in the bottom portion of the body of bicycle. In this case, a sensing object may be buried in the ground of the parking station. In this case, the parking sensing device 15 may employ the non-contact sensor (e.g., a Hall IC or magnetic induction type proximity sensor that reacts with a magnet provided in the ground of the parking station). In the case of using the parking sensing device 15, when the power-assisted bicycle 1 is in the parking station, a signal representing that the bicycle is in the parking station is input to the motor controller 21 even though the body of bicycle is not yet locked. As will be described later, the signal of the parking sensing device 15 may be input to the BMC 32.

Another example of the parking sensing device 15 is a communication module communicable with a communication device provided in the parking station. The communication may employ Near Field Communication or wire communication. In the case of using Near Field Communication, for example, the communication device provided in the parking station sends out a predetermined signal (hereinafter, the signal sent out by the communication device at the parking station side is referred to as "station signal"). Then, when the parking sensing device 15 receives the station signal from the communication device in the parking station, the parking sensing device 15 inputs a signal representing the reception to the motor controller 21.

In the case of using Near Field Communication, the communication module that functions as the parking sensing device 15 is provided to a position communicable with the communication device in the parking station when the power-assisted bicycle 1 is coupled to the lock device 90. In an example, the parking sensing device 15 is provided in the locked portion 8d of the power-assisted bicycle 1, and the communication device in the parking station is provided in the lock device 90. The parking sensing device 15 may be provided in a location different from the locked portion 8d. The communication device in the parking station may be provided at a position different from the lock device 90. Various communication protocols may be used. The communication protocol may be appropriately selected in consideration of the distance between the attachment position of the parking sensing device 15 to the body of bicycle and the position of the communication device in the parking station side or the like.

In the case of using the wire communication, for example, the parking sensing device 15 as the communication module is connected to a terminal provided in the locked portion 8d. A terminal for connection to the terminal of the locked portion 8d is provided in the communication device of the lock device 90.

In the case where the communication module is used as the parking sensing device 15, the parking sensing device 15 may not only receive the above described station signal but also transmit various kinds of information on the power-assisted bicycle 1 and the battery 30 to the communication device in the station and receive the information from the communication device in the station. As describe above, the power-assisted bicycle 1 of the present embodiment is a bicycle for rent to the user. For example, unique ID information may be provided to each power-assisted bicycle 1 for management of statuses of utilization of a plurality of power-assisted bicycles 1. In that case, the ID information may be transmitted and received between the parking sensing device 15 and the communication device in the parking station. Alternatively, when unique ID information is provided to the battery 30 possessed by the user, the motor controller 21 may acquire the ID information from the BMC 32 and then the ID information may be transmitted and received between the parking sensing device 15 and the communication device in the parking station. Alternatively, information about the numbers of charging and discharging times, hours of use, diagnosis of the battery 30 may be stored in the memory of the BMC 32. In that case, the motor controller 21 may acquire the information from the BMC 32 and then transmit the information to the communication device in the parking station. Then, various information received by the communication device in the parking station may be transmitted to e.g., a host device for management of the parking station. Note that, in the case where the parking sensing device 15 is used in the above describe manner, the position of the parking sensing device 15 and the position of the communication device provided in the lock device 90 are desirably defined so that communication is harder to be made between the communication device of the other lock device 90 and the parking sensing device 15, i.e., so that crosstalk between the communication device of the other lock device 90 and the parking sensing device 15 is harder to occur.

As described above, when sensing that the bicycle is placed in the parking station based on the signal input from the parking sensing device 15, the motor controller 21 restricts the drive of the electric motor 22. That is, the drive of the electric motor 22 is inhibited and thus the output torque of the electric motor 22 is set to zero. Alternatively, the allowable maximum torque for the electric motor 22 is set to be lower than that when the bicycle is not placed in the parking station.

The motor controller 21 of the example shown in Fig. 2 has a parking determination unit 21a and a motor control unit 21b. These are realized by the microprocessor of the motor controller 21 executing programs stored in the memory.

The parking determination unit 21a determines whether or not the bicycle is placed in the parking station based on the signal input from the parking sensing device 15. More specifically, when the parking sensing device 15 is a sensor attached to the locked portion 8d, the parking determination unit 21a determines whether or not the body of bicycle is locked by the lock device 90 based on the signal of the parking sensing device 15. When the parking sensing device 15 is the above described communication module, the parking determination unit 21a determines whether or not the bicycle is placed in the parking station based on a signal representing that the parking sensing device 15 has received the above described station signal.

If the parking determination unit 21a determines that the bicycle is placed in the parking station, the drive of the electric motor 22 is restricted. The drive restriction of the electric motor 22 may be performed by various methods. In an example, the motor control unit 21b outputs a value for setting the torque output by the electric motor 22 to zero as a electronic current command value to the motor drive circuit 23. If the parking determination unit 21a determines that the bicycle is not placed in the parking station, the motor control unit 21b releases the drive restriction of the electric motor 22 and executes the above described control of the electric motor 22 based on the pedal force by the rider and the gear shift position.

In another example, when the parking determination unit 21a determines that the bicycle is placed in the parking station, the parking determination unit 21a transmits a signal representing the determination to the BMC 32. Then, the BMC 32 stops power supply from the battery main body 31 to the motor drive circuit 23 (that is, stops discharging of the battery main body 31). If not receiving the signal, the BMC 32 allows power supply from the battery main body 31 to the motor drive circuit 23. When the parking determination unit 21a determines that the bicycle is not placed in the parking station, the parking determination unit 21a may transmit information representing the determination to the BMC 32.

As shown in Fig. 2, an example of the assist system 10 may include a notification device 24E connected to the motor controller 21. The notification device 24E is a device for issuing notices to the user, and the motor controller 21 includes a notification control unit 21c that controls the notification device 24E.

As described above, the power-assisted bicycle 1 is a bicycle for rent to the user registered in advance. The battery 30 is possessed by the user. In an example, when the power-assisted bicycle 1 is placed in the parking station (the power-assisted bicycle 1 is returned) by the user, the notification control unit 21c issues an instruction for prompting detachment of the battery 30 from the body of bicycle to the user through the notification device 24E (hereinafter, the instruction is referred to as "battery detachment instruction notice"). According to the notification, the user may be prevented from leaving the parking station with the battery 30 left in the body of bicycle. The notification control unit 21c determines whether or not the bicycle has been returned based on the signal of the parking sensing device 15, and, when the bicycle has been returned, issues the battery detachment instruction notice. Alternatively, the notification control unit 21c may issue the battery detachment instruction notice if the bicycle has been returned and the battery 30 is mounted on the body of bicycle.

An example of the notification device 24E employs a sound generator and a drive circuit therefor. In this case, the notification device 24E emits predetermined sound as the battery detachment instruction notice when the power-assisted bicycle 1 is placed in the parking station by the user. For example, the predetermined sound is a voice message or beep sound prompting detachment of the battery 30 from the body of bicycle. Further, another example of the notification device 24E employs an indicator such as a display screen or LED and a drive circuit therefor. In this case, the notification device 24E displays a predetermined message or lights in a predetermined pattern when the power-assisted bicycle 1 is returned.

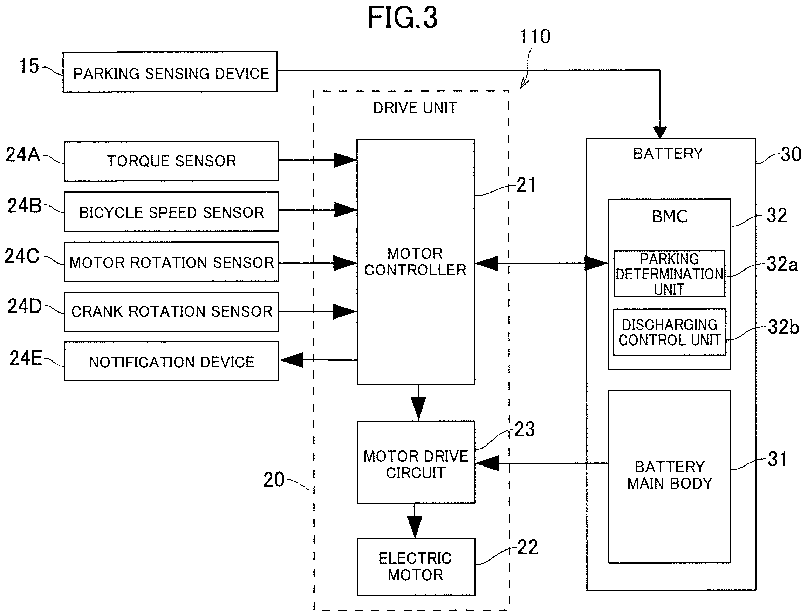

Fig. 3 shows a modified example of the assist system 10. In the drawing, the same signs are assigned to the same devices as those explained above.

In an assist system 110 shown in Fig. 3, the signal of the parking sensing device 15 is input to the BMC 32. Also, in the example, the parking sensing device 15 employs a sensor provided in the locked portion 8d of the power-assisted bicycle 1 or a communication module communicable with the communication device provided in the parking station.

In the example in Fig. 3, the BMC 32 includes a parking determination unit 32a and a discharging control unit 32b. These are realized by the microprocessor of the BMC 32 executing programs in the memory.

The parking determination unit 32a determines whether or not the bicycle is placed in the parking station based on the signal input from the parking sensing device 15 like the parking determination unit 21a. In an example, when the determination that the bicycle is placed in the parking station is made, the discharging control unit 32b stops power supply from the battery main body 31 to the motor drive circuit 23 (that is, stops discharging of the battery main body 31). When the parking determination unit 32a determines that the bicycle is not placed in the parking station, the discharging control unit 32b allows power supply from the battery main body 31 to the motor drive circuit 23.

As another example, in an embodiment where the motor controller 21 is driven by the electronic power from the battery 30 (that is, the battery 30 is a power source of the motor controller 21), the discharging control unit 32b may stop the power supply to the motor controller 21. Thereby, the drive of the motor controller 21 is stopped, and thus, the drive of the electric motor 22 is stopped. When the determination that the bicycle is not placed in the parking station is made, the discharging control unit 32b supplies power to the motor controller 21. As a result, the motor controller 21 may execute the above described control of the electric motor 22 based on the pedal force by the rider and the gear shift position.

In yet another example, when the parking determination unit 32a determines that the bicycle is placed in the parking station, the parking determination unit 32a may transmit a signal representing the determination to the motor controller 21. In this case, the motor controller 21 restricts the drive of the electric motor 22.

In an embodiment where the communication module is used as the parking sensing device 15 in the assist system 110, the parking sensing device 15 may transmit information on the power-assisted bicycle 1 and the battery 30 to the communication device in the station and receive the information from the communication device in the station and itself like.

As described above, the power-assisted bicycle 1 includes the drive unit 20 including the electric motor 22 for assisting the pedal force applied by the rider to the pedals and the motor controller 21 that controls the electric motor 22 based on the pedal force by the rider. Further, the power-assisted bicycle 1 includes the battery 30 that accumulates electronic power for supply to the electric motor 22, the locked portion 8d to be coupled to the lock device 90 provided in the parking station, and the device 15 that senses that the bicycle is placed in the parking station. The electric motor 22 is restricted from driving when the bicycle is placed in the parking station. Thereby, a large force due to drive of the electric motor 22 may be prevented from acting on the lock device 90 and the body of bicycle when the bicycle is placed in the parking station. As a result, the need for reinforcement of the lock device 90 and the body of bicycle of the power-assisted bicycle 1 may be reduced.

The present teaching is not limited to the above described power-assisted bicycle 1 and the assist systems 10, 110, but various changes may be made.

For example, the power-assisted bicycle 1 may include a mechanism for restricting movement of the body of bicycle in other locations than the parking station. For example, a lock mechanism from which the end of a chain or wire is detachable may be provided in the power-assisted bicycle 1. According to the configuration, when the user temporarily leaves the power-assisted bicycle 1 rented by the user, the user can secure the power-assisted bicycle 1 to the location by hanging a chain or wire over a public property such as a utility pole provided in the location and securing the chain or wire to the lock mechanism. When the power-assisted bicycle 1 includes the lock mechanism, a sensor for sensing the activation of the lock mechanism may be provided in the body of bicycle. If the lock mechanism is activated, the drive of the electric motor 22 may be restricted.

The invention is defined by independent claims 1 and 7. Preferred embodiments are defined by the dependent claims.

## Claims

1. A power-assisted bicycle comprising:
a drive unit (20) including an electric motor (22) for assisting pedal force applied to pedals (2) and a motor controller (21) configured to control the electric motor (22) based on pedal force applied to the pedals (2);
a battery (30) configured to accumulate electronic power to be supplied to the electric motor (22); and
a locked portion (8d) for coupling to a lock device (90) provided in a parking station;
**characterized by** a device (15) for sensing that the bicycle is placed in the parking station, wherein the electric motor (22) is configured to be restricted from driving when said device (15) senses that the bicycle is placed in the parking station.

2. A power-assisted bicycle according to claim 1, **characterized in that** the device (15) for sensing that the bicycle is placed in the parking station is a sensor configured to sense coupling between the locked portion (8d) of the bicycle and the lock device (90) provided in the parking station.

3. A power-assisted bicycle according to claim 1, **characterized in that** the device (15) for sensing that the bicycle is placed in the parking station is a communication module provided in a body of the bicycle or the battery (30) for communication with a communication device provided in the parking station.

4. A power-assisted bicycle according to any one of claims 1 to 3, **characterized in that** the motor controller (21) is configured to restrict the electric motor (22) from driving when the bicycle is placed in the parking station.

5. A power-assisted bicycle according to any one of claims 1 to 3, **characterized in that** the battery (30) is configured to restrict electronic power from being supplied from the battery (30) to the drive unit (20) when the bicycle is placed in the parking station.

6. A power-assisted bicycle according to any one of claims 1 to 5, **characterized in that** the battery (30) is detachable from the body of the bicycle, and the bicycle includes a notification device (24E) configured to issues an instruction to prompt detachment of the battery (30) to the user when the bicycle is placed in the parking station.

7. An assist method for a power-assisted bicycle including a locked portion (8d) to be coupled to a lock device (90) provided in a parking station, the bicycle comprising:
an electric motor (22) for assisting pedal force applied to pedals (2) of the bicycle;
a motor controller (21) configured to control the electric motor (22) based on pedal force applied to pedals (2); and the method is **characterized by:**
sensing that the bicycle is placed in the parking station,
restricting the electric motor (22) from driving when said device (15) senses that the bicycle is placed in the parking station.

8. An assist method according to claim 7, **characterized by:**
sensing coupling between the locked portion (8d) of the bicycle and the lock device (90) provided in the parking station for sensing that the bicycle is placed in the parking station.

9. An assist method according to claim 7 or 8, **characterized by:**
restricting electronic power from being supplied from a battery (30) to the electric motor (22) when the bicycle is placed in the parking station.

10. An assist method according to claim 9, **characterized by:**
issuing an instruction to prompt detachment of the battery (30) to the user when the bicycle is placed in the parking station.

## Patentansprüche

1. Ein Leistungs-Unterstütztes-Fahrrad, das umfasst:
eine Antriebs-Einheit (20), die einen Elektro-Motor (22) zur Unterstützung einer Pedal-Kraft, die auf Pedale (2) ausgeübt ist, und einer Motor-Steuerung (21), die konfiguriert ist, um den Elektro-Motor (22) auf der Grundlage der Pedal-Kraft, die auf die Pedale (2) ausgeübt ist, zu steuern, beinhaltet;
eine Batterie (30), die konfiguriert ist, um elektronische Energie zu speichern, die dem Elektro-Motor (22) zuzuführen ist; und
einen verriegelten Abschnitt (8d) zum Koppeln an eine Verriegelungs-Vorrichtung (90), die in einer Park-Station vorgesehen ist; **gekennzeichnet durch** eine Vorrichtung (15) zum Erfassen, dass das Fahrrad in der Park-Station platziert ist, wobei der Elektro-Motor (22) konfiguriert ist, dass er zum Antreiben beschränkt ist, wenn die Vorrichtung (15) erfasst, dass das Fahrrad in der Park-Station platziert ist.

2. Ein Leistungs-Unterstütztes-Fahrrad gemäß Anspruch 1, **dadurch gekennzeichnet, dass** die Vorrichtung (15) zum Erfassen, dass das Fahrrad in der Park-Station platziert ist, ein Sensor ist, der konfiguriert ist, um die Kopplung zwischen dem verriegelten Abschnitt (8d) des Fahrrads und der Verriegelungs-Vorrichtung (90), die in der Park-Station vorgesehen ist, zu erfassen.

3. Ein Leistungs-Unterstütztes-Fahrrad gemäß Anspruch 1, **dadurch gekennzeichnet, dass** die Vorrichtung (15) zum Erfassen, dass das Fahrrad in der Park-Station platziert ist, ein Kommunikations-Modul ist, das in einem Körper des Fahrrads oder der Batterie (30) vorgesehen ist, zur Kommunikation mit einer Kommunikations-Vorrichtung, die in der Park-Station, vorgesehen ist.

4. Ein Leistungs-Unterstütztes-Fahrrad gemäß einem der Ansprüche 1 bis 3, **dadurch gekennzeichnet, dass** die Motor-Steuerung (21) konfiguriert ist, um den Elektro-Motor (22) zum Antreiben zu beschränken, wenn das Fahrrad in der Park-Station platziert ist.

5. Ein Leistungs-Unterstütztes-Fahrrad gemäß einem der Ansprüche 1 bis 3, **dadurch gekennzeichnet, dass** die Batterie (30) konfiguriert ist, um die Zufuhr von elektronischer Energie von der Batterie (30) zur Antriebs-Einheit (20) zu beschränken, wenn das Fahrrad in der Park-Station platziert ist.

6. Ein Leistungs-Unterstütztes-Fahrrad gemäß einem der Ansprüche 1 bis 5, **dadurch gekennzeichnet, dass** die Batterie (30) von dem Körper des Fahrrads abnehmbar ist, und
das Fahrrad eine Benachrichtigungs-Vorrichtung (24E) enthält, die konfiguriert ist, um eine Anweisung zur Aufforderung zum Abnehmen der Batterie (30) an den Benutzer auszugeben, wenn das Fahrrad in der Park-Station platziert ist.

7. Ein Unterstützungs-Verfahren für ein Leistungs-Unterstütztes-Fahrrad, das einen verriegelten Abschnitt (8d) beinhaltet, der mit einer Verriegelungs-Vorrichtung (90), die in einer Park-Station vorgesehen ist, zu verbinden ist, wobei das Fahrrad umfasst:
einen Elektro-Motor (22) zur Unterstützung von Pedal-Kraft, die auf Pedale (2) des Fahrrads ausgeübt ist;
eine Motor-Steuerung (21), die konfiguriert ist, um den Elektro-Motor (22) auf der Grundlage von Pedal-Kraft, die auf die Pedale (2) ausgeübt ist, zu steuern; und das Verfahren ist **gekennzeichnet durch:**
Erfassen, dass das Fahrrad in der Park-Station platziert ist,
Beschränken des Antriebs des Elektro-Motors (22), wenn die Vorrichtung (15) erfasst, dass das Fahrrad in der Park-Station platziert ist.

8. Ein Unterstützungs-Verfahren gemäß Anspruch 7, **gekennzeichnet durch:**
Erfassen einer Kopplung zwischen einem verriegelten Abschnitt (8d) des Fahrrads und der Verriegelungs-Vorrichtung (90), die in der Park-Station vorgesehen ist, zum Erfassen, dass das Fahrrad in der Park-Station platziert ist.

9. Ein Unterstützungs-Verfahren gemäß Anspruch 7 oder 8, **gekennzeichnet durch:** Beschränken der Versorgung des Elektro-Motors (22) mit elektronischer Energie von einer Batterie (30), wenn das Fahrrad in der Park-Station platziert ist.

10. Ein Unterstützungs-Verfahren gemäß Anspruch 9, **gekennzeichnet durch:** Ausgeben einer Anweisung zur Aufforderung, die Batterie (30) abzunehmen, an den Benutzer, wenn das Fahrrad in der Park-Station platziert ist.

## Revendications

1. Vélo à assistance électrique comprenant :
un unité d'entraînement (20) incluant un moteur électrique (22) pour assister une force de pédalage appliquée à des pédales (2) et un contrôleur de moteur (21) configuré pour contrôler le moteur électrique (22) selon une force de pédalage appliquée aux pédales (2) ;
une batterie (30) configurée pour accumuler une puissance électrique à fournir au moteur électrique (22) ; et
une partie verrouillée (8d) à coupler à un dispositif de verrouillage (90) installé sur un poste de stationnement ;
**caractérisé par** un dispositif (15) pour détecter que le vélo est placé sur le poste de stationnement, dans lequel le moteur électrique (22) est configuré pour être empêché de fonctionner lorsque ledit dispositif (15) détecte que le vélo est placé sur le poste de stationnement.

2. Un vélo à assistance électrique selon la revendication 1, **caractérisé en ce que** le dispositif (15) pour détecter que le vélo est placé sur le poste de stationnement est un capteur configuré pour détecter un couplage entre la partie verrouillée (8d) du vélo et le dispositif de verrouillage (90) installé sur le poste de stationnement.

3. Un vélo à assistance électrique selon la revendication 1, **caractérisé en ce que** le dispositif (15) pour détecter que le vélo est placé sur le poste de stationnement est un module de communication installé dans un cadre du vélo ou la batterie (30) pour une communication avec un dispositif de communication installé sur le poste de stationnement.

4. Vélo à assistance électrique selon l'une quelconque des revendications 1 à 3, **caractérisé en ce que**
le contrôleur de moteur (21) est configuré pour empêcher le moteur électrique (22) de fonctionner lorsque le vélo est placé sur le poste de stationnement.

5. Vélo à assistance électrique selon l'une quelconque des revendications 1 à 3, **caractérisé en ce que**
la batterie (30) est configurée pour empêcher une puissance électrique d'être acheminée de la batterie (30) à l'unité d'entraînement (20) lorsque le vélo est placé sur le poste de stationnement.

6. Vélo à assistance électrique selon l'une quelconque des revendications 1 à 5, **caractérisé en ce que**
la batterie (30) peut se détacher du cadre du vélo, et le vélo inclut un dispositif de notification (24E) configuré pour émettre une instruction adressée à l'utilisateur pour inviter au détachement de la batterie (30) lorsque le vélo est placé sur le poste de stationnement.

7. Procédé d'assistance pour un vélo à assistance électrique incluant une partie verrouillée (8d) à coupler à un dispositif de verrouillage (90) installé sur un poste de stationnement, le vélo comprenant :
un moteur électrique (22) pour assister une force de pédalage appliquée à des pédales (2) du vélo ;
un contrôleur de moteur (21) configuré pour contrôler le moteur électrique (22) selon une force de pédalage appliquée à des pédales (2) ; et le procédé est **caractérisé par** :
détection que le vélo est placé sur le poste de stationnement,
empêchement du moteur électrique (22) de fonctionner lorsque ledit dispositif (15) détecte que le vélo est placé sur le poste de stationnement.

8. Procédé d'assistance selon la revendication 7, **caractérisé par** :
détection d'un couplage entre la partie verrouillée (8d) du vélo et le dispositif de verrouillage (90) installé sur le poste de stationnement pour détecter que le vélo est placé sur le poste de stationnement.

9. Procédé d'assistance selon la revendication 7 ou 8, **caractérisé par** :
empêchement d'acheminement d'une puissance électrique d'une batterie (30) au moteur électrique (22) lorsque le vélo est placé sur le poste de stationnement.

10. Procédé d'assistance selon la revendication 9, **caractérisé par** :
émission d'une instruction adressée à l'utilisateur pour inviter au détachement de la batterie (30) lorsque le vélo est placé sur le poste de stationnement.
